# EUROPEAN PATENT APPLICATION

(11) **EP 4 756 778 A1**
(43) Date of publication of application: **10.06.2026**
(21) Application number: 24383321.7
(22) Date of filing: 04.12.2024
(51) Int. Cl.: G08G 1/005, A61H 3/06, G08G 1/042

(54) **SYSTEM AND METHOD FOR INTELLIGENT MOBILITY ASSISTANCE (AMI)**

(71) Applicant: Interlight Sp, S. L., 14008 Córdoba (ES)
(72) Inventor: Jiménez Aguilar, Jerónimo, Córdoba (ES)
(74) Representative: Pons IP

(57) **Abstract**

The invention discloses an urban mobility assistance system and method that is intended to be integrated into an urban environment. The system notifies or alerts users about possible obstacles along the way and serves as a guide to direct users to a destination of interest. The assistance is produced by detecting, through a support element (3) carried by the user, an electromagnetic field generated by a conductor wire (1) that is installed below ground level when receiving alternating current. The invention provides an efficient solution to the lack of adaptability and customization in current assistance solutions for blind people, since it provides continuous and specific guidance based on information from the environment and the user's needs.

## Description

### OBJECT OF THE INVENTION

The present invention is framed within the field of urban mobility.

Specifically, the invention focuses on an Intelligent Mobility Assistance (AMI) system designed to be integrated into an urban environment, allowing users to be alerted to the presence of obstacles and points of interest.

Another object of the invention is a method of assistance for urban mobility that enables preventive alerting and notification for users.

### BACKGROUND OF THE INVENTION

Currently, there are several technologies developed to improve the mobility and autonomy of visually impaired individuals in urban environments. Among these are systems that combine sensors and technologies that provide information about the surroundings to send signals, alerts, or notifications based on this information, offering increased safety and guidance.

One of the most advanced examples in this field is the WeWALK smart cane, which integrates ultrasonic sensors and Bluetooth^{®} connectivity to detect obstacles above the user's chest level, notifying them through vibrations in the handle and offering navigation instructions. The WeWALK system not only vibrates when it detects objects above the user's waist, which traditional canes cannot do, but it also connects to mobile apps and a Global Positioning System (GPS), providing route instructions through voice commands. However, the WeWALK system has some limitations, such as its reliance on GPS, which can be inaccurate in densely built urban areas or indoors, and the lack of integration with existing road infrastructure.

Another notable example in this field is the Wayband system, which uses haptic vibrations through a wearable device on the user's wrist. This system also employs GPS to guide visually impaired individuals by providing vibrations that indicate the direction of movement, connecting to a GPS navigation app on a smartphone. While this system offers an effective solution for navigation, the accuracy of GPS remains a limiting factor, especially in complex environments such as large urban areas, where signals may be obstructed by interference or outdated environmental updates, such as ongoing construction projects or other situations that generate difficulties. Additionally, like the WeWALK system, Wayband does not provide an integrated solution with the city's infrastructure or other systems that could offer more precise guidance based on urban signage.

In general, these types of devices rely solely on GPS technology or sensors to detect obstacles, but lack a comprehensive approach to the environment that dynamically adjusts to the city's infrastructure or the specific needs of the users.

In addition, other systems within the field of urban mobility, such as signaling systems, for example, acoustic traffic lights and the Passblue system, provide assistance at specific points, such as pedestrian crossings. These devices emit sounds when the traffic light is green, helping visually impaired individuals cross safely. However, their scope is limited, as they do not offer continuous assistance throughout the entire journey nor provide information tailored to the particularities of the path or the preferences of the user.

In summary, although there are technologies that serve as guides for visually impaired individuals, such as WeWALK, Wayband, and acoustic traffic lights, these systems do not provide a complete and personalized solution for guiding visually impaired individuals in complex urban environments. Currently, the available technologies do not allow for continuous tracking or real-time adaptation based on the city's infrastructure. This gap highlights the need to develop new solutions that integrate urban signage with personalized navigation systems, offering precise and safe guidance throughout the entire journey.

### DESCRIPTION OF THE INVENTION

The invention describes an intelligent urban mobility assistance system designed to be integrated into an urban environment, comprising:
- a conductor wire placed below ground level in an urban environment and configured to generate an electromagnetic field when receiving alternating current,
- at least one support element intended to be carried by a user and comprising:
   - at least one Hall effect electromagnetic sensor configured to detect the electromagnetic field generated by the conductive wire,
   - a controller connected to the electromagnetic sensor;
- at least one signaling module configured to alert the user and connected to the controller of the support element;
wherein the controller is configured to activate the signaling module when the Hall effect electromagnetic sensor detects the electromagnetic field generated by the conductor wire.

Optionally, the support element is a cane or an ankle brace.

The urban environment in which the conductor wire is installed may include strategic points such as traffic lights, intersections, pedestrian crossings, bus and taxi stops, stations, and/or police stations.

The conductor wire is preferably arranged in a straight line, except at strategic points, such as the beginning of intersections, bus stops, or taxi stops, for example, where it is arranged in specific shapes such as zigzag or circular shape or any other shape.

Optionally, the support element includes a communication module that is connected to the controller and is configured to emit and receive radiofrequency signals. Additionally, the communication module may be configured to synchronize with other assistance devices in the urban environment and connect with communication modules of other support elements to exchange information in order to prevent collisions with those support elements. Furthermore, the support element may also include a positioning module that is connected to the controller, along with at least one ultrasonic sensor located at the end that is connected to the controller and is configured to detect obstacles.

Additionally, the support element may include at least one electronic compass connected to the controller, which is configured to continuously measure the user's direction of movement.

The signaling module may include vibration modules, acoustic modules, and/or a mobile application with a voice recognition module. The mobile application is configured to establish and adjust personalized routes through voice commands from the user and, furthermore, incorporates real-time street information via the positioning module of the support element.

Optionally, the signaling module may be integrated into the support element and configured to emit alerts or notifications through vibrations, sounds, and/or voice messages, and/or provide real-time orientation indications and information through the positioning module. These alerts may vary depending on the information obtained from the environment through the Hall effect electromagnetic sensor and/or the communication module and/or based on user preferences or needs previously selected, such as customization of the intensity and type of alert.

Optionally, the support element includes a 3.5mm jack input that can be used to connect wired headphones and/or a Bluetooth module that can be used to connect wireless headphones.

The invention also relates to a method of assistance for urban mobility that uses the described urban mobility assistance system and that includes the following steps:
a) detecting electromagnetic signals generated by the conductor wire installed at strategic locations in the urban environment using the electromagnetic sensor located in the support element;
b) determining the user's position relative to the conductor wire using the Hall effect electromagnetic sensor, the user's position using the positioning module, and/or one or more obstacles using the ultrasonic sensor;
c) determining the user's direction of movement using the electronic compass and the positioning module, avoiding collisions;
d) emitting alerts and notifications through the signaling module, dynamically adjusted based on the information determined in steps a), b), and c).

Optionally, the method may include a step in which a specific destination is determined by the user using the voice recognition module of the mobile application, and another step in which it is determined whether the user has reached their destination using the positioning module or the communication module, which is configured to detect beacons installed at building entrances.

### DESCRIPTION OF THE DRAWINGS

To complement the description that is being made and for the purpose of helping to better understand the features of the invention according to a preferred practical exemplary embodiment thereof, a set of drawings is attached as an integral part of said description in which the following is depicted in an illustrative and non-limiting manner:

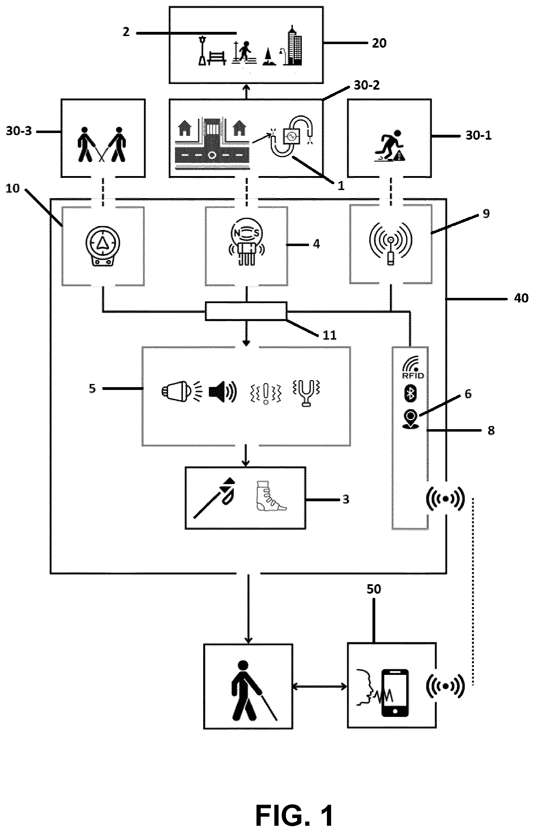

Figure 1: Shows a block diagram of the architecture and operation of the Intelligent Mobility Assistance (AMI) system.

### PREFERRED EMBODIMENT OF THE INVENTION

The present invention relates to a system for intelligent urban mobility assistance (AMI).

Figure 1 shows an embodiment of the AMI system, which includes a block diagram representing the architecture and operation of the system. As can be seen in Fig. 1, the AMI system consists of:
- a conductor wire (1),
- a support element (3),
- a Hall effect electromagnetic sensor (4) integrated into the support element (3),
- a signaling module (5) integrated into the support element (3),
- a communication module (8) integrated into the support element (3),
- an ultrasonic sensor (9) integrated into the support element (3),
- an electronic compass (10) integrated into the support element (3),
- a controller (11) integrated into the support element (3),
- a mobile application with voice recognition.

These components are grouped into the following blocks that make up the system:
- A block (40) dedicated to the electronics and sensors installed in the support element (3), which may include a cane or an ankle brace.
- Three blocks with the functionalities of the system: Installation of alternating current conductor wires (30-2) for the creation of safe and precise routes, obstacle detection system (30-1), and anti-collision system (30-3).
- A block (50) representing the voice recognition of the mobile application.
- A block (20) representing the locations and areas where the invention can be implemented.

The proposed system incorporates an alternating current conductor wire (1) placed under the pavement of streets in urban environments, defining paths and routes with accuracy and precision. This alternating current generates a magnetic field, which is detected by the Hall effect electromagnetic sensor (4) located at the end of the cane or ankle brace, capable of detecting such fields and converting the information into an electrical signal.

Once the sensor converts the information into an electrical signal, it sends it to the controller (11), which is responsible for sending a series of commands to the signaling module (5) located in the cane or ankle brace. that includes alert devices such as a vibration system or an integrated audio system. The alerts emitted by these devices (vibrations and sounds) are customizable, allowing different informational messages to be conveyed to the user. If the user (a visually impaired person) moves out of the detection range, they will stop receiving vibrations and will hear an acoustic alert indicating this, for example, with the following words: "You have left the safe zone, the safe zone is to your left/right, etc."

The system includes a mobile application that integrates a voice recognition system and a radio frequency system that assigns a specific identification to the user. This allows the user to set routes in real time by pressing a button to activate voice recognition. In this way, the user can request a route to a specific destination, for example, by saying: "I want to go to location X," and a route to that location will automatically be established.

In order to guide the user accurately to their destination, the installation of beacons is included at all locations that require them, such as the entrance of a park, a store, or a shopping center, for example. A radio frequency system integrated into the communication module (8), upon detecting these beacons, sends the necessary information to alert the user that they have arrived at the door of the requested destination.

To facilitate the determination of the user's exact location, the system includes a positioning system (6). Thus, if the user requests a route to a specific place and that place is a location that does not have radio frequency tags at the entrance, the system will use a GPS signal to indicate to the user that they have arrived at their destination.

In order to prevent collisions between visually impaired users following the same conductor wire (1) in opposite directions, the system incorporates an electronic compass (10) at the end of the cane. This compass continuously measures the direction in which the user is moving, while the integrated radio frequency system in the cane gathers information from the environment. The operation to avoid a collision is as follows: if a user is moving north (with a value of 55) and the system detects that another user is moving in the same direction (with a similar value, such as 52 ±5), no alert will be issued, or a mild notification, such as a soft vibration or a sound message, will be generated, as both are moving in the same direction. However, if the system detects another user moving in the opposite direction, for example, south (with a value of -46), both users will receive an alert indicating the collision risk if they continue advancing.

The installation of the conductor wire (1) varies at intersections and strategic points. When the user reaches an intersection or a street that splits into several directions, the conductor wire (1) divides, extending towards each of the possible routes. At strategic points, such as bus stops, pedestrian crossings, taxi stops, among others, the conductor wire (1) follows a specific and repetitive pattern, such as a high-frequency wavy design. This pattern allows the user to easily identify when they have entered a pedestrian crossing and when they have reached the other end, facilitating orientation when returning to the sidewalk.

Additionally, the system incorporates a 3.5mm jack on the cane and/or a Bluetooth^{®} system for the integration of headphones, whether wired or wireless, through which more detailed audio messages can be transmitted, facilitating the reception of information by the user.

Additionally, the components integrated into the cane include an ultrasonic sensor (9), designed to function similarly to metal detectors, but in this case for detecting nearby objects and people. As the cane is moved from left to right, the ultrasonic sensor (9) emits sound waves that bounce off obstacles in its proximity. This technology allows the user to receive information about the proximity of these obstacles through a vibration system. The closer the detected object is, the more intense the vibrations of the cane become; thus, as the user approaches an obstacle, the intensity of the vibration increases, providing a progressive and effective alert about their immediate surroundings.

The Intelligent Mobility Assistance System (AMI) represents a significant innovation compared to current solutions for assisting visually impaired individuals, which often lack adaptability and personalization. Unlike these alternatives, the AMI system stands out for its ability to provide continuous and specific guidance based on gathering information from the environment and the user's needs, with the following distinctive features:
1. Proactive and Dynamic Guidance: The AMI system implements an alternating current (AC) conductor wire (1) along with Hall effect electromagnetic sensors (4), which not only detect the user's position but also adapt to their path in real time. As the user moves, the system emits vibrations and acoustic signals to assist navigation along predefined routes. Additionally, the ultrasonic sensor (9), located at the end of the cane, detects nearby obstacles, providing extra tactile alerts, such as vibrations, which enhance the user's spatial awareness.
   In areas of interest such as bus stops, crossings, intersections, and pedestrian crossings, the pattern of the conductor wire (1) varies, adopting shapes like "zigzag" or wavy patterns that cause the vibration frequency to change. This ensures that the user can more accurately identify the location of these strategic points in the urban environment.
   This proactivity in guidance, along with the ability to adjust information based on the user's exact location, provides an accurate and effective solution, as it does not rely solely on GPS or fixed signals.
2. Advanced customization: The system tailors alerts and settings according to the user, adjusting vibrations, sounds, and messages, which enhances the autonomy and safety of the user compared to traditional solutions. This flexibility in customization boosts the security, comfort, and independence of visually impaired individuals, adapting the urban environment to their needs or circumstances.

Based on the prior art, the objective of the present invention is to develop a system for urban mobility assistance, specifically designed for blind or visually impaired individuals, with the aim of improving their autonomy and safety in the urban environment, adapting it to the needs of this group. This system fulfills the following objectives:
1. Installation of an alternating current conductor wire in the urban pavement: The system is based on the installation of an alternating current conductor wire (1) beneath the pavement of urban streets, which generates a detectable electromagnetic field. The current flowing through the wire is of safety extra-low voltage (SELV), so the wire is embedded at a shallow depth, ensuring both the safety of the system and people, as well as minimal interference with the urban environment. This key component allows visually impaired individuals to follow a defined path by detecting the conductor wire (1) with an electromagnetic sensor (4) based on the Hall effect, capable of detecting magnetic fields and converting this information into an electrical signal. This sensor is integrated into canes or ankle braces. Strategic points, but not limited to, for the installation of these conductor wires include:
   - Sidewalks and pedestrian streets with high foot traffic density.
   - Urban areas with difficult navigation for visually impaired individuals.
   - Areas near points of interest, such as public transport stations, bus or taxi stops, hospitals, parks, and shopping centers.
   - Crosswalks, traffic lights, pedestrian crossings, intersections.
2. Signal and Alert Emission: The system allows the emission of vibration, acoustic, speech signals, or any other type of alert when the Hall effect sensor detects the defined path of the alternating current (AC) conductor wire (1). In this way, visually impaired individuals can follow the path set by the conductor wire (1), avoiding obstacles and the various challenges that may arise in urban environments for people with this disability. This system provides autonomy, comfort, and integration into the environment for visually impaired individuals.
3. Mobile Application and GPS System with Radio Frequency Identification: The system incorporates radio frequency for user identification. Thanks to this identification, along with the mobile application that uses voice recognition and a GPS system, the user can set routes and know their exact position. In this way, they receive vibrations, alerts, and sound messages or voice instructions while following the correct path, as well as when they arrive at their designated destination. The user's arrival is detected through GPS signal or by using the radio frequency system through beacon detection at the entrance of establishments or public buildings. If the user deviates from the established route, alerts are triggered to notify them. This functionality is particularly valuable in promoting the independence of visually impaired individuals. Additionally, with the personal identification system, it can be integrated with the innovative IDAI system developed by the company Interlight to provide additional assistance in cases of disorientation or the need for personalized support.
4. Ultrasonic Proximity Detection System: The system includes an ultrasonic sensor (9) located at the end of the cane. As the cane is moved from side to side, the sensor detects the proximity of nearby obstacles and sends signals that are translated into vibrations proportional to the distance of those obstacles. This operation is similar to the one of metal detectors, providing the user with an intuitive alert about their surroundings, thereby helping detect steps or other obstacles that may be encountered along the user's path.
5. Collision Prevention Between Users: To prevent collisions between visually impaired individuals sharing the same path in opposite directions, the system incorporates an innovative mechanism based on an electronic compass (10) installed in the cane. This compass continuously monitors the user's movement direction, while the radiofrequency system exchanges information with nearby canes. In situations where users are moving in similar directions, the system will limit the alerts, emitting only mild notifications when necessary. However, if it detects that users are moving in opposite directions, more intense alerts will be triggered in the form of vibrations or audible messages to warn them of the risk of collision with another visually impaired user.
6. Customizable System Settings: The invention allows for a complete configuration of vibrations and audible alerts, tailoring them to the individual needs of each user. Considering the heightened tactile and auditory sensitivity of visually impaired individuals, there are numerous possible combinations for alert emissions, including varying intensities and patterns. However, the most intuitive configurations will always be prioritized, ensuring that users can easily and effectively adjust them according to their preferences and specific contexts.
7. Adaptation of the System to Different Urban Environments: The invention is designed to adapt to a variety of urban environments, ranging from densely populated pedestrian areas to quieter residential zones. The flexibility of the system allows for its integration in both new areas and existing urban infrastructures, providing an accessible and scalable solution for local authorities interested in improving accessibility for individuals with visual impairments.

## Claims

1. Urban mobility assistance system comprising:
- a conductor wire (1) located below ground level in an urban environment (2) and configured to generate an electromagnetic field upon receiving alternating current,
- at least one support element (3) intended to be carried by a user and comprising:
- at least one Hall effect electromagnetic sensor (4) configured to detect the electromagnetic field generated by the conductor wire (1),
- a controller (11) connected to the electromagnetic sensor (4);
- at least one signaling module (5) configured to alert the user and connected to the controller (11) of the support element (3);
wherein the controller (11) is configured to activate the signaling module (5) when the Hall effect electromagnetic sensor (4) detects the electromagnetic field generated by the conductor wire (1).

2. The urban mobility assistance system according to claim 1, wherein the conductor wire (1) is installed at strategic points in the urban environment selected from the group consisting of: traffic lights, intersections, pedestrian crossings, bus and taxi stops, stations, and/or police stations.

3. The urban mobility assistance system according to claim 1, wherein the support element (3) further comprises a communication module (8) connected to the controller (11) configured to emit and receive radiofrequency signals.

4. The urban mobility assistance system according to claim 3, wherein the communication module (8) of the support element (3) is configured to connect with communication modules of other support elements (3) and exchange information to prevent collisions.

5. The urban mobility assistance system according to claim 1, wherein the signaling module (5) is selected from: vibration modules, acoustic modules, and/or a mobile application comprising a voice recognition module.

6. The urban mobility assistance system according to claim 1, wherein the support element (3) further comprises a positioning module (6) connected to the controller (11).

7. The urban mobility assistance system according to claims 5 and 6, wherein the mobile application is configured to establish and adjust personalized routes through user voice commands, also incorporating real-time street information through the positioning module (6).

8. The urban mobility assistance system according to claims 1 or 6, where the signaling module (5) is integrated into the support element (3) and is configured to issue alerts or notifications and/or provide guidance and information on orientation in real time through the positioning module (6).

9. The urban mobility assistance system according to claim 1, where the support element (3) further comprises at least one ultrasonic sensor (9) connected to the controller (11) located at one end of the support element (3) and configured to detect obstacles.

10. The urban mobility assistance system according to claim 1, wherein the support element (3) further comprises at least one electronic compass (10) connected to the controller (11) configured to continuously measure the user's traveling direction.

11. The urban mobility assistance system according to claim 1, wherein the support element (3) further comprises a 3.5mm jack input.

12. The urban mobility assistance system according to the previous claims, wherein the signaling module (5) is configured to issue alerts through: vibrations, sounds and/or speeches.

13. The urban mobility assistance system according to claims 1 or 3, wherein the signaling module (5) is configured to issue different alerts depending on the information obtained from the environment using the Hall effect electromagnetic sensor (4) and/or the communication module (8) and/or based on previously selected preferences or needs of the users.

14. The urban mobility assistance system according to claims 3 to 13, wherein the communication module (8) is configured to synchronize with other assistance devices in the urban environment.

15. The urban mobility assistance system according to the previous claims, wherein the conductor wire (1) is arranged in a straight line or in a zigzag shape or a circular shape at strategic points.

16. Urban mobility assistance method that makes use of the urban mobility assistance system according to claims 1 to 15, comprising the steps of:
a) detecting electromagnetic signals generated by the conductor wire (1) installed in strategic places in the urban environment using the electromagnetic sensor (4) located in the support element (3);
b) determining a position of the user with respect to the conductor wire (1) by means of the Hall effect electromagnetic sensor (4), a position of the user by means of the positioning module (6) and/or one or more obstacles by means of the ultrasonic sensor (9);
c) determining a direction of movement of the user using the electronic compass (10) and the positioning module (6) avoiding collisions;
d) issuing alerts and notifications through the signaling module (5) dynamically adjusted based on the information determined in steps a), b) and c).

17. The method according to claim 16, further comprising a step of determining a specific destination by the user by means of the first voice recognition module of the mobile application.

18. The method according to claim 16, further comprising a step of determining whether a user has reached his or her destination by means of the positioning module (6) or by means of the communication module (8) configured to detect beacons installed at entrances of buildings.
